# EUROPEAN PATENT APPLICATION

(11) **EP 4 403 600 A1**
(43) Date of publication of application: **24.07.2024**
(21) Application number: 24152092.3
(22) Date of filing: 16.01.2024
(51) Int. Cl.: C08K 3/22, C08K 3/26, C22B 7/00

(54) **PRODUCT AND METHOD FOR PRODUCING IT**

(30) Priority: 17.01.2023 IT 202300000564
(71) Applicant: I.BLU S.r.l., 33010 Tavagnacco (UD) (IT)
(72) Inventor: Gosparini, Paolo, Fagagna (UD) (IT); Gosparini, Elia, Fagagna (UD) (IT)
(74) Representative: Petraz, Gilberto Luigi

(57) **Abstract**

Composite polymeric product and method for producing it starting from a primary heterogeneous mixture comprising polymeric material.

## Description

### FIELD OF THE INVENTION

Some embodiments described here concern a composite polymeric product which for example can be used, in particular, as a substitute for fossil sources, as a non-limiting example in the metallurgical field and/or steel industry. For example, a possible use of the composite polymeric product described here may be in a process for the production of metal products starting from ferrous material, using an electric arc furnace (EAF), or a cupola furnace (CF), or a blast furnace (BF) or direct reduction processes (DRP), as polymeric material in at least partial replacement of the fuel provided in the preheating and melting of the ferrous material and/or in at least partial replacement of the carbon sources used for refining the chemistry of the molten metallic material and/or as a reducing agent for the oxidized forms of the metals and/or as a foaming agent for the melting slag and/or as a carbon C and/or hydrogen H carrier.

Another example of possible use of the composite polymeric product described here can be in a thermal or catalytic conversion process, for example gasification or pyrolysis.

Another example of use of the composite polymeric product described here can be in a coke production process by replacing up to 10% of the coking coal used to power the coking process in the coking batteries.

Another example of use of the composite polymeric product described here can be in an electrode production process in at least partial replacement of coal and its derivatives, pitch and additives.

### BACKGROUND OF THE INVENTION

It is known that the market is currently showing a growing need for energy sources and chemical principles which derive from the use of fossil fuels. For example, in the metallurgical and/or steelmaking sectors there is a high demand for fossil sources, used both as energy sources, for example to generate heat, as well as sources of chemical compounds, for example to generate the reducing agents necessary for the production of ferrous and non-ferrous metal products, such as aluminum, copper, silicon, zinc or other, in which the metal element can occur in oxidized form.

For example, the use of PCI (Pulverized Coal Injected), MET coke, GPC (Green Petroleum Coke) for the aforementioned purposes is known.

It is known that there is a growing need to reduce consumption of fossil sources, both due to their progressive depletion, and due to the costs and high environmental impact related to extraction, transport, refining, processing, combustion.

Furthermore, these fossil sources are increasingly less usable from a sustainable development and circular economy perspective.

For these and other reasons, the growing need for a new generation of fuels that combine high energy efficiencies with a low environmental impact is known.

In this scenario, the use of polymeric products is known, for example originating from the separate collection of waste from urban and special plastic packaging, at least partly replacing traditional fossil sources.

The use of these polymeric products, in particular for example in the metallurgical and/or steelmaking sector, has advantages linked to an immediate and widespread availability, ease of use, contributes to the disposal and/or recycling of plastic materials otherwise destined for landfills and/or energy recovery, and contributes to supporting the circular economy.

This use therefore has a double pollution reduction effect: reuse waste plastic materials instead of incinerating and/or accumulating them in landfills, and reduce the need to use fossil sources.

In particular, the production of metals relies on the contribution of carbon to perform various types of functions, which include reducing, foaming, exergonic, and recarburizing. Carbon is in fact an element that in metallurgical RedOx reactions can behave as a reducing species, and this is the effect it has on oxidized metal forms. The generation of carbon monoxide (CO), for example, can be sought in the steelmaking sector, in particular in the electrosteel industries. In this field, for example, the generation of CO under slag and its rise toward the atmosphere of the melting furnace allow the swelling of the slag itself. The latter is, in fact, a dielectric material that, thanks to the increase in volume, submerges the ends of the electrodes between which the electric arc is shot, which is submerged. Doing so reduces the dissipation of the electrical energy on the vat and vault panels, and increases the kwh yield. The generation of CO involves, as a secondary effect, the development of energy in the form of heat, required by the metallurgical process. Finally, the carbon added to the process can contribute, with different yields, to increasing the carbon percentage of the steel being tapped.

Depending on the source of the carbon, this can generally be volatile or fixed in nature. If volatile in nature, it can contribute to the carburization of the metal phase in the steelmaking sector, and can take place by carburization reaction in the presence of the oxidized forms of Fe. If fixed in nature, it can contribute to the carburization of the liquid metal phase for the solubilization of the crystalline lattice carbon in the molten metallic iron.

The sources of carbon traditionally used for the purposes disclosed above are coal and its derivatives, such as anthracite, lignite, peat, steel and metallurgical coke, petroleum derivatives such as powdered petroleum coke, methane and other fuels such as spent oils.

Over the years, there has been a growing interest in the search for new and alternative carbon sources replacing traditional ones that could also reduce the carbon footprint of the metal production process, whereby valid alternatives have been identified in biochar, polymer flows such as shredded tires (PFU or ELT, as in CN-A-106350635 or in US-B-5.322.544 described below) or polymers derived from plastic flows (as in WO-A-2020/188615), or rigid plastics derived from the shredding of flows of waste plastics from scrap treatment (ASR, as in US-A-2019/0046992 described below).

Document US-A-5.554.207 describes the production of a product usable in furnaces aimed at the recovery of iron present in iron oxides. The iron oxide is mixed with a water-insoluble thermoplastic material and heated to melt the plastic in order to obtain a binder for the iron oxide. The material thus obtained is fed back to the furnace for iron recovery. Among the thermoplastics used PVC is provided, which is notoriously problematic because it contains 50% by weight of chlorine. Powders and thermoplastics are processed at temperatures between 150°C and 260°C. This temperature range, during the agglomeration phase, does not allow the dechlorination of PVC, since to remove the chlorine efficiently it is necessary to reach temperatures between 300°C and 400°C. Furthermore, this document does not provide for any selection upstream of the agglomeration/pelletizing phase. The absence of selection implies that there is no control over the pollutants present in thermoplastics, which can introduce potentially harmful elements, such as Cl and S, in the steelmaking process. In addition, the lack of selection in this known document does not guarantee consistency in the chemical composition and in the lower calorific value (LCV), important for example in the steelmaking sector. Finally, the conglomerate described in this document is not easily transportable to be added to the steelmaking process, since agglomerated/pelletized thermoplastics tend to maintain the temperature at which they were processed and to conglomerate with each other, since they are still close to the softening temperature. The large, melted masses generated are highly problematic for movement and related fire risks.

Document US-A-6.635.093 discloses a method for making pelletized fuel containing plastic and cellulose, by recycling domestic or industrial waste material flows. The pelletized fuel can be used as fuel in a blast furnace. The plastics contained in this known fuel are derived from waste flows and are at least 60% of the total, of which preferably at least 70% of the total of the plastics consists of polyethylene (PE). During the pelletizing process, the plastics, and possibly the cellulose, reach temperatures between 80°C and 125°C. These temperatures, however, are not sufficient to obtain the complete melting of both the PE and also of the polymers other than PE and, therefore, the pellet obtained is heterogeneous and not completely conglomerated. Consequently, the material is non-uniform, partly melted and with a relatively low density and therefore not easily transportable. The fact of containing non melted plastic fragments leads the pellet to fracture if subject to shocks during transport, to release from the melted mass some heterogeneous fragments, PET frays, for example, and to facilitate the formation of clogging of the injection line, for example, in the blast furnace. In addition, the waste flow used is not subject to selection on the basis of the type of material, but is subject to screening, deferrization and shredding. This means that there may be unwanted components such as PVC; the chlorine contained in it cannot be removed since the process temperatures, even in this case, are too low and do not allow it. Since the process temperatures are low, the moisture content is also high, between 2 and 10%, a value not compatible with a steelmaking application since the thermal energy would lead to evaporate the water and not melt the iron ore. Also in this case, no type of cooling is specified. The increasing cellulose content in the fuel described here has the effect of lowering the lower calorific value and, in addition to this, considering the absence of selection of the material upstream of the screening, the aforementioned lower calorific value will be completely inconstant. In addition, the cellulose fraction present in the fuel may result in a reduction of the lower calorific value, a parameter that must necessarily be kept high so that, for example, the adiabatic flame temperature is not lowered in the application of the blast furnace. The addition of cellulose also leads to a potential increase of ash, given the mineral fillers contained in the paper, for example, which are residual downstream of the combustion and lead to a reduction in permeability, for example, in the blast furnace.

Document EP-A-3.418.400 describes a method for producing cast iron in a blast furnace using pellets containing thermoplastic materials. Such pellets consist, in particular, of plastic material variable between 50 and 70% by weight, of which the PE is at least 60% by weight. Cellulosic material is present from 30 to 50% by weight of the product. In general, the method described in this document has disadvantages and drawbacks in common with US-A-6.635.093 discussed above.

The paper Monika Kuznia et al., "Research on thermal decomposition of waste PE/PP", Inzynieria Chemiczna I Procesowa/Chemical and Process Engineering, vol. 34, no. 1, 1 March 2013 describes the use of PE/PP plastic waste from urban waste in the steelmaking sector, in particular by injecting granules or pellets in the blast furnace. This document has limitations related to lack of cooling, absence of dechlorination, absence of selection of the type of materials upstream of the production of the granules and, therefore, has the disadvantages and drawbacks already discussed in relation to these aspects in documents US-A-5.554.207, USA-6.635.093 and EP-A-3.418.400.

The paper Minoru Asanuma et al., "Establishment of Advanced Recycling Technology for Waste Plastics in Blast Furnace", JFE Technical Report no. 13, 1 May 2009 discloses the use of plastic waste in the blast furnace. This document has limitations linked at least to the absence of selection of the type of materials contained in the flow of plastic waste and, therefore, has the disadvantages and drawbacks already discussed in relation to this aspect in documents US-A-5.554.207, US-A-6.635.093 and EP-A-3.418.400.

It is also known to use alternative carbon sources so that the amount of fossil sources introduced into the process can be reduced. These alternative sources can allow for a reduction in the amount of carbon processed, but they also have considerable disadvantages depending on the type of material used.

It is known, for example, from document US-B-5.322.544 to use ELT (End of Life Tires), shredded tires from which the textile fiber/steel part has been removed, as a substitute for charging anthracite and insufflated depending on sizes. This has a calorific value not dissimilar to that of anthracite, it has a lower carbon content in favor of the percentage of hydrogen. However, there are various issues related to the presence of sulfur, since it is vulcanized rubber. This limits the possibility of using this carbon source given the problem related to the formation of sulfur chemical compounds such as SO₂ or ternary acids such as H₂SO₄.

The use of ASR (Automotive Shredded Residues) as a substitute for fossil sources is also known from document US-A-2019/0046992. The aforementioned ASR is a fraction of the shredding of so-called ELVs (End of Life Vehicles) after the removal of the recyclable fractions, such as air bags, batteries, wheels, belts. It is of variable size, pulverized or briquetted, and can be used as a replacement for anthracite; however, this practice has considerable disadvantages. In particular, the calorific value is lower than anthracite (15-25MJ/kg), it has a decidedly high ash content (10-25%), heavy metals and a non-constant chemical composition with very high variability. The following is an example relating to the variability of the chemical composition over several samples of the same ASR size:

| % | METHOD | LIGHT FRACTION | HEAVY FRACTION |
|---|---|---|---|
| ASH | CNR IRSA 2 Q 64 VOL 2 1984 | 23 | 12.2 |
| Cl | UNI EN 15408:2011 | 1.2 | 1.8 |
| S | UNI EN 15408:2011 | 0.23 | 0.4 |
| H | UNI EN 15407:2011 | 6.21 | 9.1 |
| N | UNI EN 15407:2011 | 1.41 | 4.2 |
| C | UNI EN 15407:2011 | 47.7 | 58.2 |
| VOLATILE MATTER | ASTM D5142 | 72 | 84.8 |

The strong variability of the analyses in question affects the performance of the ASR in the steelmaking process, since the inconstant chemical composition does not allow to guarantee constant performances inside the furnace. In particular, some parameters, such as the high presence of ash, affect the energy efficiency of the melting process, since they increase its specific consumption. In addition, the reactions of gasification and volatilization of the ASR are violent and rapid, therefore they do not allow to manage the chemical input efficiently in the furnace and lead the fume/panel temperature profiles to reach peaks due to the amount of thermal energy not absorbed by the bath/scrap. In addition, the percentage of chlorine is uncontrolled, since there is currently no known technique for accurately selecting each element present in the ASR and since each shredded piece of scrap is different depending on the vehicle and typical interior trimmings. In addition, the non-constant and/or controlled presence of chlorine limits the use of ASR, given the criticality linked to the formation of dioxins/salts/hydrochloric acid in the steel production cycle. These effects compromise the benefit as a substitute for traditional fossil sources and imply, compared to coal, the need to increase the energy input to the bath through natural gas and oxygen, increasing traditional consumption.

It is also known from the paper V. Sahajwalla et al., "Recycling Waste Plastics in EAF Steelmaking: Carbon/Slag Interactions of HDPE-Coke Blends", Steel Research International, Verlag Stahleisen Gmbh, Dusseldorf, DE, vol. 80, no. 8, 1 August 2009, to use HDPE, possibly mixed with MET-coke. This solution has the disadvantage that HDPE has between 27% and 30% residual ash. Consequently, although the use of HDPE can bring benefits on slag foaming, the practice is limited by the low calorific value and the high amount of combustion residue (ash), which increase, also in this case, the energy consumption of the furnace.

Document CN-A-106350635 describes the combined use of ELT and generic plastic waste, pulverized and used in a combined manner, but with the technical/application limit of a use of 379kg/basket of generic plastic waste, 406kg/basket of ELT and 462kg/basket of coke. The use of this blend is also limited solely to the foaming effect of the slag, due to the chemical limits of the ELT-plastic waste blend. In particular, a problem with the use of ELT lies in the percentage of sulphur, even greater than 1% by weight.

Document US-A-2011/0239822 describes the use in the ferroalloy production process of a carbon source and a carbon-containing polymer, the latter comprising one or more types of rubber (synthetic or natural) and other polymers such as PP, PS, polybutadiene styrene and APS to swell slag. The technical limit deriving from this practice derives from the fact that there are no benefits other than the foaming effect, and that it is not possible to replace the coke/anthracite mixture used with more than 60%.

Still remaining, by way of a non-limiting example, in the steelmaking sector, other known carbon sources would be, in principle, carbonates, for example forms of ternary salts containing the carbonate ion. The use of such sources has never been consolidated in this context, since the release of CO is endothermic and subtracts energy from the metallurgical process. In particular, for the steelmaking process it is known to use CaCOs and MgCOs for the input of CO downstream of the energy supply but above all to obtain scorifiers such as magnesium oxide (MgO) and calcium oxide (CaO), which go to compose the melting slag, to balance its acidity in order not to affect the life of the refractories that make up the inner lining of the melting furnace. Such oxides can be obtained in nature from mineral materials containing carbonates, in particular in the mineral called dolomite. Historically, the oxides were obtained directly in the electrosteel industry and, for the reasons listed above related to the energy optimization of the melting process, this was moved to dedicated decarbonation plants (so-called calcific), in which CaO, MgO are obtained through the administration of heat. These oxides are then used, in the already "baked" form, in metallurgical and steelmaking processes.

Document US 10.308.798 B2 discloses a polyethylene composition comprising a base resin and an inorganic mineral filler which is present in the composition in a quantity comprised between 1 and 50% by weight with respect to the weight of the composition. The inorganic mineral filler is selected from CaCOs and talc. The base resin comprises: a) a first crosslinked polyethylene (PEX) having a gel content (measured according to ASTM D 2765:2006) comprised between 5% and 80% with respect to the weight of the crosslinked polyethylene (PEX), the crosslinked polyethylene (PEX) being from recycled waste, and b) a second polyethylene (PE) selected from virgin polyethylene and recycled polyethylene, or mixtures thereof.

Document US 3.933.731 A discloses a composite material comprising: (1) from about 2 to about 50 parts by weight of a plastic material selected from the group consisting of thermoplastic resins and thermosetting resins, in particular polyethylene, polypropylene and unsaturated polyester, and (2) from about 50 to about 98 parts by weight of a filler composition comprising (i) gypsum (i.e. calcium sulfate dihydrate) and/or calcium sulfite and (ii) a calcium hydroxide additive in a quantity comprised between about 0.5 and about 60% by weight with respect to the total weight of the filler composition.

Document US 2022/275168 A1 discloses a resin composition comprising: a polyolefin-based resin and an inorganic powder substance in a mass ratio comprised between 50:50 and 10:90, wherein the inorganic powder substance comprises calcium carbonate. Such calcium carbonate comprises a first calcium carbonate having an average particle diameter of 0.5 µm or more and smaller than 2.0 µm measured with an air permeation method in accordance with JIS M-8511, and a second calcium carbonate having an average particle diameter of 2.0 µm or more and smaller than 9.0 µm measured with the air permeation method in accordance with JIS M-8511. The mass ratio of first calcium carbonate to second calcium carbonate is comprised between 90: 10 and 98:2.

Document GB 1.410.857 A discloses thermoplastic resin compositions comprising: (1) from 8 to 40% by weight of polyethylene with melting index from 0.1 to 10, (2) from 10 to 30% by weight of an ethylene/vinyl acetate copolymer with melting index from 2 to 20, (3) from 0.05 to 2% by weight of a metal salt of an ethylene copolymer with an ethylenically unsaturated carboxylic acid with melting index from 0.5 to 40, and (4) from 40 to 70 parts by weight of calcium sulfite and/or calcium carbonate having an average particle diameter in the range from 0.5 to 70 microns. The metal salt can be a zinc, magnesium, calcium, sodium or potassium salt, and the copolymer can be derived from methacrylic, acrylic, crotonic, maleic or fumaric acid. The compositions can also contain stabilizers and lubricants and can be formed into articles by means of blow, injection or extrusion molding.

Document US 4.847.317 A discloses a composition consisting essentially of: (a) from 30 to 90 parts by weight of a polyolefin selected from the group consisting of ethylene homopolymers and ethylene copolymers with at least one C3-C10 alpha-olefin hydrocarbon, and mixtures thereof; (b) from 10 to 70 parts by weight of a modified polyethylene, said polyethylene being selected from the group consisting of ethylene homopolymers and ethylene copolymers with at least one C4-C10 alpha-olefin hydrocarbon, and mixtures thereof, said polyethylene having been modified by grafting at least one of either an ethylenically unsaturated carboxylic acid or an ethylenically unsaturated carboxylic acid anhydride onto said polyethylene so that the resulting modified polyethylene contains a total quantity comprised between 0.2 to 2% by weight, based on the weight of the polyethylene, of said acid and said anhydride. Such polyolefin and said modified polyolefin are chosen so that (a) and (b) form a mixture having a melting index lower than 20 dg/min. The composition also consists of: (c) from 20 to 70 percent by weight of the combined quantity of (a) and (b) of at least one filler selected from the group consisting of magnesium hydroxide, calcium hydroxide, alumina trihydrate, hydroxyl-containing magnesium carbonates, and calcium carbonate-containing hydroxyl carbonates. The quantity of filler and of modified polyolefin is chosen so that the total quantity of said acid and said anhydride is comprised between 0.1 and 4% by weight of filler.

Document US 2017/190848 A1 describes a composite polymeric material obtained through a process comprising the steps of:
(a) supplying a mineral filler material;
(b) supplying a polymeric material;
(c) conveying the mineral filler material of step (a) and the polymeric material of step (b) to a mixer, in particular an extruder;
(d) forming a composite polymeric material in said mixer.

In this known document, the mineral filler material of step (a) is added to the polymeric material of step (b) in a quantity such that the content of mineral filler of the resulting composite polymeric material is comprised between 60 and 900 phr, and in which the mineral filler material of step (a) is added to the polymeric material of step (b) by using direct addition technology, so that no pneumatic transport of the resulting mixture to the mixing section is involved. The polymeric material supplied in step (b) can comprise a mineral filler material and can also comprise a recycled polymeric material. The mineral filler material can be selected from the group consisting of calcium carbonate, gypsum, limestone, marble, dolomite, titanium dioxide, barium sulfate, talc, clay, mica and any mixture thereof. The polymeric material can comprise a polymer selected from the group consisting of vinyl polymers, vinyl copolymers, acrylic polymers, acrylic copolymers, chlorinated polyethylenes and any mixture thereof.

The paper Minoru Asanuma et al.: "Establishment of Advanced Recycling Technology for Waste Plastics in Blast Furnace", JFE Technical Report no. 13, 1 May 2009 describes the use of plastic waste as a reducing agent for injection into blast furnaces. This document describes that, in order to improve the efficiency of combustion and gasification of small particles/agglomerates with low plastic strength, the following steps were taken: (1) increase the resistance of plastic waste by means of combined agglomeration with CaCO₃, (2) improve the combustibility of plastic waste by means of simultaneous injection of pulverized coal and natural gas, (3) develop an advanced plastic recycling process for pulverized plastic waste.

In the Italian national regulatory field, the national technical standard UNI 10667-17:2018 and subsequent amendments and additions is known, which applies to secondary raw materials from industrial residues and/or post-consumption materials. It defines the requirements and test methods for heterogeneous mixtures to be used alone or mixed with other materials, such as reducing agents, in steelmaking processes. This standard defined the regulatory field within which secondary raw plastic materials can be suitable for the usage purposes reported here, leaving ample room to develop various autonomous technological solutions in national and international territory.

There is therefore the need to perfect a composite polymeric product, which for example can be used in, but is not limited to, the field of metallurgy and/or the steel industry, that can overcome at least one of the disadvantages of the state of the art.

In particular, one purpose of the present invention is to provide a composite polymeric product that can be used in processes for steelmaking applications, in particular which can at least partly replace fossil sources in such processes for metallurgical and/or steelmaking applications.

Another specific purpose of the present invention is to provide a composite polymeric product comprising at least one additional calcium and/or magnesium based compound.

Another purpose is to provide a composite polymeric product comprising at least one additional carbonate based compound, so that said carbonates serve as an additional source of carbon for the purposes discussed here without compromising the process in which the composite polymeric product described here is used.

Another specific purpose of the present invention is to provide a composite polymeric product comprising compounds that contain fixed or volatile carbon, so that said compounds serve as an additional source of carbon for the purposes discussed here.

Another specific purpose of the present invention is to provide a composite polymeric product comprising compounds that contain calcium and/or magnesium in the form of oxides and/or hydroxides.

It is also a purpose of the present invention to provide a composite polymeric product that favors the development of a virtuous mechanism that contributes to the progressive replacement of fossil sources and the creation of a circular economy.

Another purpose of the present invention is to provide a composite polymeric product whose production process allows it to be integrated with different cycles of production and recycling of plastic materials, for example by reusing processing waste.

Another purpose of the present invention is to provide a composite polymeric product which overcomes the limitations of the plastic products currently marketed, for example, in the metallurgical and/or steelmaking sector.

Another purpose of the present invention is to provide a composite polymeric product with constant chemical characteristics.

Another purpose of the present invention is to provide a composite polymeric product characterized by the presence of almost no pollutants and/or materials that could compromise the performance of the product, for example, in the steelmaking sector.

Another purpose of the present invention is to provide a composite polymeric product which can partly or even completely replace the traditional carbon source used, such as for example anthracite.

Another purpose of the present invention is to provide a composite polymeric product that serves as a controlled carbon source with constant characteristics aimed at stabilizing the metallurgical and/or steelmaking process and overcoming the limits of the current state of the art that derive from using alternatives to fossil sources.

Another purpose is to provide a method for producing a composite polymeric product in accordance with the present disclosure.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, some embodiments described here concern a composite polymeric product comprising a polymeric fraction and one or more additional compounds.

Favorably, at least the polymeric fraction represents a carbon source useful in the processes in which the polymeric product can be used.

In possible embodiments, which can be combined with all embodiments described here, also the aforementioned one or more additional compounds can be carbon sources, or they may not be carbon sources. It is also possible to combine one or more additional carbon source compounds with one or more additional compounds that are not carbon sources.

In particular, in the event that they are carbon sources, the one or more additional compounds can be, or include, sources of fixed carbon (in crystalline or amorphous form) or of volatile carbon in hydrocarbon chain; in particular, here and hereafter in the description such additional compounds are also defined as fuel compounds. It is also possible to include in this definition those compounds that include sources of volatile carbon, in which the carbon is bonded to other elements such as oxygen, for example cellulosic compounds. For example, these could be compounds that include both sources of volatile carbon in hydrocarbon chain (that is, in which the carbon is bonded to hydrogen) as well as sources of volatile carbon in which the carbon is bonded to other elements such as oxygen, for example cellulosic compounds.

Furthermore, always in the event the aforementioned one or more additional compounds are carbon sources, they can be carbon sources from carbonate ions.

Therefore, the fuel compounds as defined above and/or the carbonate compounds can favorably be carbon source compounds.

In possible embodiments, which can be combined with all the embodiments described here, the aforementioned one or more additional compounds can be, or include, compounds or products containing calcium (Ca) and/or magnesium (Mg), or calcium-based and/or magnesium-based.

In possible implementations, the products containing calcium (Ca) and/or magnesium (Mg) can be carbon sources if their constituent substances comprise carbon, in particular they are carbonates.

In some embodiments, it is therefore possible for the aforementioned one or more additional compounds to be carbon sources containing calcium (Ca) and/or magnesium (Mg); a possible example are calcium carbonates and/or magnesium carbonates.

In other embodiments, it is possible that the aforementioned one or more additional compounds are products containing oxides and/or hydroxides based on (Ca) and/or magnesium (Mg), and therefore are not carbon sources.

In some embodiments, which can be combined with all embodiments described here, the one or more additional compounds present in the composite polymeric product described here can, therefore, be or include fuel compounds as defined here and/or carbonate compounds and/or products containing calcium and/or magnesium in the form of oxides and/or hydroxides, or mixtures or combinations thereof.

According to some embodiments, which can be combined with all embodiments described here, the one or more additional compounds can be present in the composite polymeric product in a percentage lower than 50%, preferably lower than 40%, more preferably lower than 30%, even more preferably lower than 20% by weight of the dry sample of composite polymeric product.

According to some embodiments, which can be combined with all embodiments described here, the polymeric fraction of the composite polymeric product described here can be present in a percentage greater than 50%, preferably greater than 60%, more preferably greater than 70%, even more preferably greater than 80% by weight of the dry sample of composite polymeric product.

According to some embodiments, which can be combined with all embodiments described here, the polymeric fraction of the aforementioned composite polymeric product comprises one, two or several of either: polyethylene (PE), polypropylene (PP), polyethylene terephthalate (PET), polystyrene (PS), or combinations thereof. For example, the polymeric fraction can include two or more of the aforementioned polymers. The polyethylene can for example include high density polyethylene (HDPE) and/or low density polyethylene (LDPE).

Advantageously, in some embodiments, which can be combined with all the embodiments described here, the composite polymeric product can be densified, that is, subjected to densification.

Other embodiments concern a method for producing a composite polymeric product starting from a primary heterogeneous mixture comprising polymeric material.

According to some embodiments, the method provides to make available a suitable polymeric fraction in fragmented form with the desired size, which is processed together with one or more additional compounds, in particular fuel compounds as defined here and/or compounds based on calcium (Ca) and /or magnesium (Mg), in particular in the form of carbonates and/or in the form of oxides and/or hydroxides, for example as described above, in order to obtain the composite polymeric product described here.

The operation of processing the polymeric fraction in fragmented form with the aforementioned one or more additional compounds can be carried out cold or hot.

In particular, the fuel and/or carbonate compounds and/or products containing calcium and/or magnesium in the form of oxides and/or hydroxides described here can be associated with the polymeric fraction by processing them by mixing.

According to some embodiments, the polymeric fraction, before or while it is processed together with the fuel and/or carbonate compounds and/or products containing calcium and/or magnesium in the form of oxides and/or hydroxides, can be subjected to densification or agglomeration.

According to some embodiments, the polymeric fraction can be subjected to a granulation or shredding process.

According to some embodiments, the granulation or shredding can occur after the polymeric fraction has undergone densification.

According to some embodiments, the polymeric fraction can be previously subjected to primary selection, for the removal of metallic material, non-polyolefin polymers and extraneous non-polymeric fraction, or to a process of removal of pollutants, such as extraneous fractions containing aggregate/heavy metals and polymers containing chlorine, such as PVC.

According to possible embodiments, the composite polymeric product described here has an aluminum content, more in particular metallic aluminum, lower than 3% by weight, in particular lower than 2% by weight. In other embodiments, the composite polymeric product described here can be essentially free of aluminum, more in particular metallic aluminum.

In accordance with possible example embodiments, a method for producing a composite polymeric product comprises:
- fragmentation into the desired size of a primary heterogeneous mixture comprising polymeric material, obtaining a fragmented material with the desired size;
- primary mechanical selection of the fragmented material for the removal of metallic material, non-polyolefin polymers and non-polymeric extraneous fraction;
- subjecting the fragmented material to plasticization, obtaining a densified material;
- subjecting the densified material to cooling, obtaining a densified and cooled material;
- associating one or more additional compounds with the polymeric fraction before and/or simultaneously with and/or after the densification, to obtain the composite polymeric product.

According to other embodiments, the method, after cooling, can provide to further fragment the composite polymeric product obtained into the desired size.

In some embodiments, the polymeric fraction of the composite polymeric product can comprise one, two or several of the following polymers: polyethylene (PE) and/or polypropylene (PP) and/or polyethylene terephthalate (PET) and/or polystyrene (PS), or combinations thereof. For example, the polymeric fraction can include two or more of the aforementioned polymers. The PE can for example include high density polyethylene (HDPE) and/or low density polyethylene (LDPE).

In some embodiments, the aforementioned additional compounds comprise carbonates including calcium carbonate and/or magnesium carbonate.

In some embodiments, the aforementioned additional compounds comprise calcium and/or magnesium oxides and/or hydroxides.

In still other embodiments, the aforementioned additional compounds of the composite polymeric product described here include fuel compounds that can comprise elastomers, such as for example natural rubber (NR), or styrene-butadiene rubber (SBR), or commercially available products such as GVG (granular vulcanized rubber) deriving from end-of-life tires.

Advantageously, the composite polymeric product of the present invention can be used in the metallurgical field and/or steelmaking sector, for example, but not limited to, in at least partial replacement of fossil sources, as a fuel and/or as a source of carbon and/or hydrogen and/or or as a reducing agent for the oxidized forms of the metals and/or as a foaming agent for the melting slag.

Another example of possible use of the composite polymeric product described here can be in a thermal or catalytic conversion process, for example gasification or pyrolysis.

Another example of use of the composite polymeric product described here can be in a coke production process by replacing up to 10% of the coking coal used to power the coking process in the coking batteries.

Another example of use of the composite polymeric product described here can be in an electrode production process in at least partial replacement of coal and its derivatives, pitch and additives.

In some embodiments, the aforementioned primary heterogeneous mixture can comprise virgin and/or waste materials and/or plastic waste.

This characteristic allows to obtain a method that allows to process waste plastic materials or plastic waste, reintroducing them on the market for specific uses, for example in the steelmaking sector, or in a thermal or catalytic conversion process, and promoting the development of a virtuous mechanism that contributes to the creation of a circular economy.

Advantageously, the embodiments of the method described here can be integrated with different cycles of production and recycling of plastic materials, or even with other waste treatment methods.

This characteristic allows to optimize the plasticization process, since it reduces the presence of vacuum in the fragmented material and in the plasticizer.

Other embodiments concerns a method for producing a composite polymeric product, according to one variant hot-associated with one or more additional compounds, or according to another variant cold-associated with one or more additional compounds.

In the case of the variant with hot-association of one or more additional compounds, the method comprises:
- fragmentation into the desired size of a primary heterogeneous mixture comprising polymeric material, obtaining a fragmented material with the desired size;
- primary mechanical selection, without water, of the fragmented material for the removal of metallic material, non-polyolefin polymers and non-polymeric extraneous fraction;
- subjecting the fragmented material to plasticization together with one or more additional compounds, obtaining a densified material;
- subjecting the densified material to quenching at least by air cooling carried out with pneumatic transport, thus obtaining a densified and cooled material which constitutes the composite polymeric product.

In the case of the variant with cold-association of one or more additional compounds, the method comprises:
- fragmentation into the desired size of a primary heterogeneous mixture comprising polymeric material, obtaining a fragmented material with the desired size;
- primary mechanical selection, without water, of the fragmented material for the removal of metallic material, non-polyolefin polymers and non-polymeric extraneous fraction;
- subjecting the fragmented material to plasticization, obtaining a densified material;
- subjecting the densified material to quenching at least by air cooling carried out with pneumatic transport;
- subjecting the cooled densified material to association, for example by mixing, with one or more additional compounds, thus obtaining a cooled and composite densified material which constitutes the composite polymeric product.

In possible implementations, the one or more additional compounds are based on calcium (Ca) and/or magnesium (Mg).

In other implementations, the aforementioned additional compounds are carbon sources comprising calcium carbonate and/or magnesium carbonate as described here.

In other possible implementations, the one or more additional compounds are carbon sources comprising fuel compounds as described here.

In further possible implementations, the one or more additional compounds are calcium- or magnesium-based in the form of oxides and/or hydroxides, as described here.

In accordance with some embodiments, the aforementioned quenching provides that the hot densified material, transported pneumatically for the purpose of air cooling, is simultaneously subjected to a granulation process able to maximize the heat exchange and cool the composite polymeric product.

In accordance with some embodiments, the hot densified material can be subjected to the aforementioned granulation process together with an auxiliary plastic additive having a moisture content able to speed up the cooling of the composite polymeric product.

In some embodiments, the auxiliary plastic additive, which can be used for example in the implementations that provide quenching, can at least partly comprise quantities of sinking material coming from operations of flotation of plastic material in water, for example used in the field of water purification.

In some embodiments, the auxiliary plastic additive that can be used in the quenching can at least partly comprise quantities of sinking material coming from operations of flotation of plastic material in water, for example used in the selection processes in other cycles of processing plastic material.

In accordance with some embodiments, the auxiliary plastic additive comprises a styrene fraction and/or polyethylene terephthalate (PET), polystyrene (PS), and/or high density polyethylene (HDPE), and/or cellulosic fraction, and/or fabrics or mixtures thereof.

In accordance with some embodiments, the auxiliary plastic additive has a density greater than the density of water considered at ambient temperature and pressure.

In accordance with some embodiments, the plasticization temperature is between 180°C and 300°C, in particular between 200°C and 280°C.

In accordance with some embodiments, the densified and cooled composite polymeric product has a bulk density higher than 300 Kg/m³, in particular higher than 350 Kg/m³, more in particular higher than 400 Kg/m³, even more in particular higher than 500 Kg/m³ measured in accordance with the UNI EN ISO 61 standard or other equivalent recognized international standard.

In accordance with some embodiments, the primary heterogeneous mixture comprises virgin and/or waste materials and/or plastic waste.

In accordance with some embodiments, before plasticization, there can be provided a mixture of the fragmented material with a polymeric particulate material, with smaller dimensions and sizes than those of the fragmented material.

In accordance with some embodiments, the aforementioned polymeric particulate material comprises comminuted fragments of polyolefins, or other polymers.

In accordance with some embodiments, the composite polymeric product obtained has a calorific value not lower than 20 MJ/Kg, in particular not lower than 30 MJ/Kg referred to the dry sample after 4 hours of drying at 105°C, in accordance with the UNI EN 15400 standard or other equivalent recognized international standard.

In accordance with some embodiments, the composite polymeric product obtained has a chlorine content not exceeding 3.5%, in particular not exceeding 2%, more in particular not exceeding 0.8%, by weight of the dry sample of composite polymeric product after 4 hours of drying at 105°C, in accordance with the UNI EN 15408 standard or other equivalent recognized international standard.

In accordance with some embodiments, the composite polymeric product has a Sulfur content not exceeding 5000 mg/Kg, which corresponds to 0.5% by weight, in particular not exceeding 1000 mg/Kg, which corresponds to 0.1%, according to the DIN 51724-3 (2012-07) method, or other equivalent recognized international standard.

In accordance with some embodiments, the composite polymeric product obtained comprises a polymeric fraction greater than or equal to 50%, preferably greater than or equal to 60%, more preferably greater than or equal to 70%, even more preferably greater than or equal to 80% by weight of the dry sample of composite polymeric product.

In accordance with some embodiments, before the plasticization, it can be provided to add to the aforementioned fragmented material a quantity lower than 50%, preferably lower than 35%, even more preferably lower than 20% by dry weight of the fragmented material subjected to the primary selection, of a product consisting predominantly of iron oxides, for example deriving from the process of rolling metal products, in particular preferably consisting of at least 80% by dry weight of Fe oxides, preferably at least 85% by dry weight, even more preferably at least 90% by dry weight.

### DESCRIPTION OF SOME EMBODIMENTS

We will now refer in detail to the various embodiments of the invention. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing the embodiments, we must also clarify that the present description can provide other embodiments and can be obtained or executed in various other ways. We must also clarify that the phraseology and terminology used here is for the purposes of description only, and cannot be considered as limitative.

Unless otherwise defined, all the technical and scientific terms used here and hereafter have the same meaning as commonly understood by a person with ordinary experience in the field of the art to which the present invention belongs. Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

Moreover, all percentages and ratios indicated shall be understood to refer to the weight of the total composition (w/w), unless otherwise indicated.

All percentage ranges indicated here are given with the provision that the sum with respect the overall composition is 100%, unless otherwise indicated.

All the intervals reported here shall be understood to include the extremes, including those that report an interval "between" two values, unless otherwise indicated.

The present description also includes the intervals that derive from uniting or overlapping two or more intervals described, unless otherwise indicated.

The present description also includes the intervals that can derive from the combination of two or more punctual values described, unless otherwise indicated.

In accordance with the above purposes, some embodiments described here concern a composite polymeric product comprising a polymeric fraction and one or more additional compounds.

Favorably, in possible embodiments, at least this polymeric fraction represents a source of carbon useful in the processes in which the composite polymeric product can be used.

In possible embodiments, the aforementioned one or more additional compounds can also be carbon sources or, alternatively, they may not be carbon sources, or the two types can also be combined.

In particular, in the event that the aforementioned one or more compounds are carbon sources, these one or more additional compounds can be sources of fixed carbon (in crystalline or amorphous form) or of volatile carbon in hydrocarbon chain; in this case, here and in the present description such compounds are also referred to as fuel compounds. Possibly, compounds that include volatile carbon sources, in which carbon is bonded to other elements such as oxygen, for example cellulosic compounds, can also be included in this definition. For example, these could be compounds that include both volatile carbon sources in hydrocarbon chain (that is, in which carbon is bonded to hydrogen) as well as volatile carbon sources in which carbon is bonded to other elements, such as oxygen, for example cellulosic compounds.

Moreover, again in the event the aforementioned one or more additional compounds are carbon sources, they can be carbon sources from carbonate ions.

Therefore, the fuel and/or carbonate compounds can favorably be carbon source compounds.

In possible embodiments, the aforementioned one or more additional compounds can be compounds or products containing calcium (Ca) and/or magnesium (Mg), that is, based on calcium and/or magnesium.

In possible implementations, the products containing calcium (Ca) and/or magnesium (Mg) can be carbon sources if their constituent substances comprise carbon, in particular they are carbonates.

In some embodiments, it is therefore possible that the aforementioned one or more additional compounds are carbon sources containing calcium (Ca) and/or magnesium (Mg); one possible example is calcium and/or magnesium carbonates.

In other embodiments, it is possible that the above-mentioned one or more additional compounds are products containing oxides and/or hydroxides based on calcium (Ca) and/or magnesium (Mg), and are therefore not carbon sources.

In some embodiments, which can be combined with all the embodiments described here, the one or more additional compounds present in the composite polymeric product described here can, therefore, be or include fuel and/or carbonate compounds, in particular calcium and/or magnesium, and/or products containing calcium and/or magnesium in the form of oxides and/or hydroxides, or mixtures thereof.

It is understood that these additional compounds chosen from fuel and/or carbonate compounds and/or products containing calcium and/or magnesium in the form of oxides and/or hydroxides can be present individually or be mixed with each other, two by two, or all three. In other words, some embodiments are possible in which: (i) the one or more additional compounds present in the composite polymeric product are exclusively fuel compounds, (ii) or exclusively carbonates, in particular calcium and/or magnesium, (iii) or exclusively products containing calcium and/or magnesium in the form of oxides and/or hydroxides, (iv) or they are a mixture exclusively of fuel and carbonate compounds, (v) or they are a mixture exclusively of fuel compounds and products containing calcium and/or magnesium in the form of oxides and/or hydroxides, (vi) or they are a mixture exclusively of carbonates and products containing calcium and/or magnesium in the form of oxides and/or hydroxides, (vii) or they are a mixture of all three types of compounds.

According to some embodiments, which can be combined with all the embodiments described here, the one or more additional compounds chosen from fuel compounds and/or calcium and/or magnesium-based compounds, in particular calcium and/or magnesium carbonates and/or products containing calcium and/or magnesium in the form of oxides and/or hydroxides, or mixtures thereof, can be present in the composite polymeric product in a percentage lower than 50%, preferably lower than 40%, more preferably lower than 30%, even more preferably lower than 20% by weight of the dry sample of composite polymeric product.

In possible implementations, the fuel compounds can be present in a percentage lower than 50%, preferably lower than 40%, more preferably lower than 30%, even more preferably lower than 20% by weight of the dry sample of composite polymeric product.

In other possible implementations, the calcium and/or magnesium carbonates can be present in a percentage lower than 50%, preferably lower than 40%, more preferably lower than 30%, even more preferably lower than 20% by weight of the dry sample of composite polymeric product.

In other possible implementations, the products containing calcium and/or magnesium in the form of oxides and/or hydroxides can be present in a percentage lower than 50%, preferably lower than 40%, more preferably lower than 30%, even more preferably lower than 20% by weight of the dry sample of composite polymeric product.

The above-mentioned composite polymeric product can be used, by way of a non-limiting example, in the metallurgical and/or steelmaking sector as a source of carbon in a method for producing metal products.

In particular, without this in any way constituting a limitation to the scope of protection of the present invention, the composite polymeric product described here can be used in a method for producing metal products starting from ferrous material, in particular by means of an electric arc furnace (EAF), or a cupola furnace (CF), or a blast furnace (BF), or direct reduction processes (DRP), where this method for producing metal products provides that the composite polymeric product is in at least partial replacement of the fuel provided in the preheating and melting of the ferrous material and/or in at least partial replacement of carbon sources used for the refining of the molten metallic material and/or as a reducing agent for the oxidized forms of the metals and/or as a foaming agent for the melting slag and/or as a carbon C and/or hydrogen H carrier.

### Fuel compounds

In some embodiments, which can be combined with all the embodiments described here, the one or more additional compounds present in the composite polymeric product can comprise fuel compounds, defined as materials containing fixed carbon, for example in crystalline or amorphous form, and/or volatile carbon, for example in hydrocarbon chain and possibly in which carbon is bonded to oxygen. Examples of these compounds are, but are not limited to, polymers and/or materials, as such or treated, of biogenic origin, for example from activities of waste separation (so-called OFMSW), composting and anaerobic and/or aerobic digestion of organic materials (so-called F.O.S, digestate, non-composted), and/or materials, as such or treated, of agri-food and/or vegetable and/or natural derivation (wood, residues of mowing, pruning, grubbing, twigs) and/or fibers, and/or materials, as such or treated, of animal and/or industrial and/or marine derivation, and/or industrial/civil/domestic/urban/biological sludge with an organic matrix from water purification, or their possible combinations.

Some examples of treatments to which such biogenic origin materials can be subjected include thermochemical conversion treatments, such as processes of pyrolysis, roasting, steam blasting, gasification or hydrothermal carbonization (HTC) for example.

In possible implementations, additional examples of such fuel compounds can be, by way of example but not limited to, coal and its derivatives such as graphite, anthracite, coke (deriving from coking process), biogenic origin materials such as biochar (coal derived for example from processes of pyrolysis of materials with high biomass content, or other thermochemical conversion treatments such as those indicated above for example), or also tires, natural rubber (NR), SBR, SBS, Granular Vulcanized Rubber derived from End-of-Life Tires, plastics deriving from the shredding of automotive scrap (commercially known as Automotive Shredder Residue or Car Fluff), oily sludge, petroleum and its derivatives, fuel oils and its derivatives.

Favorably, in this case the Applicant has identified important synergies deriving from the use, both hot- as well as cold-associated, of the fuel compounds described above. By way of a non-limiting example, the electric arc furnace works with coal dust on all injection points aimed at obtaining foamy slag and managing the iron oxides contained therein. As is well known, coal dust contains predominantly fixed carbon in crystalline form. The use of a non-composite polymeric product on selected injection points would lead to areas of the furnace that work with different reaction thermodynamics than the traditional fossil source, generating imbalances and operational inhomogeneities. On the other hand, advantageously, the association of a desired percentage of fuel compound, as described above, with the polymeric product allows to homogenize the areas of action on the slag, and to further increase the substitutions of the traditional fossil source, also obtaining integral substitutions thereof with the composite polymeric product.

### Carbonate compounds

In some embodiments, which can be combined with all the embodiments described here, the one or more additional compounds present in the composite polymeric product can comprise one or more carbonate compounds that serve as an additional source of carbon.

In some embodiments, which can be combined with all the embodiments described here, carbonate compounds that can be used in the composite polymeric product can be materials containing the carbonate group (CO₃)²⁻ in particular ternary salts containing the ion or carbonate group (CO₃)²⁻. This ion is found, for example, in ternary salts such as CaCO₃, MgCOs, or sodium carbonate Na₂CO₃ or sodium bicarbonate NaHCO₃, or ternary acids such as carbonic acid H₂CO₃. Such materials can be found in natural mineral sources, such as dolomite for example, and/or in flows resulting from extraction activities such as slurry, eggshells and crustacean exoskeletons.

In some embodiments, which can be combined with all the embodiments described here, carbonate compounds that can be used in the composite polymeric product can be calcium carbonate CaCO, and/or magnesium carbonate MgCO₃.

The Applicant, when using CaCO, and MgCOs in the steelmaking sector, has identified the known problems deriving from their implementation for the input of carbon to the process, recognizing the fact that the endothermic reaction that allows to generate CO/CO₂ was the current application limit, since it subtracts energy from the melting process. In this case, since the steelmaking process is characterized by increasingly higher productivity that has led to an optimization of energy consumption, it has proved necessary to introduce the already oxidized form of calcium and magnesium, rather than the carbonated one. The Applicant has found that the polymeric product described here, compared to traditional carbon sources, has a higher calorific value compared to anthracite, it can therefore release a greater amount of energy and favor the dissociation of the carbonate group, for example, from the ternary salt without subtracting energy from the steelmaking process. The synergy between these two applications is therefore advantageous, since it achieves a foaming and reducing effect of the slag of the melting process which is improved compared to traditional practice. For example, the input of ternary salts with the carbonate group MgCOs and/or CaCOs associated with the polymeric product, thanks to the strongly exothermic reaction of formation of the products of the combustion of the polymeric fraction, facilitates the dissociation of CO-CO₂ from the oxide MgO and/or CaO. The endothermic dissociation reaction also allows a local lowering of the temperature of the slag, which makes it more viscous, facilitates its foaming in favor of covering the electric arc and dissipating energy on the panels during the refining phase. The combination of regulating the viscosity of the slag and generating CO-CO₂ directly under slag, additional compared to that deriving from the traditional polymeric product, generates the synergy that allows to stabilize the foaming of the slag and maximize the replacements of the fossil source. Always using as a reference the case of association of calcium and/or magnesium carbonates CaCO₃ and MgCO₃, the Applicant has found that, when hot-associated, they offer an improvement in the mechanical properties of the polymeric product. In particular, the association results in an increase in the elastic modulus, of the surface hardness of the composite polymeric product and, thanks to the higher specific weight of the carbonates, also an increase in the density of the composite polymeric product. These properties allow to reduce the frequency of clogging events during the pneumatic transport steps in the furnace, reduce the transport air necessary to pneumatically inject the material and increase the penetration capacity of the composite polymeric product into the slag.

### Compounds containing calcium and/or magnesium in the form of oxides and/or hydroxides

In further embodiments, which can be combined with all the embodiments described here, the one or more additional compounds present in the composite polymeric product can comprise products containing calcium and/or magnesium in the form of oxides and/or hydroxides.

In possible implementations, the products containing calcium and/or magnesium in the form of oxides and/or hydroxides can be materials containing a Ca (calcium) and/or Mg (magnesium) component in the form of oxide and/or hydroxide, they can be calcitic, magnesium or dolomitic limes.

Other compounds containing calcium and/or magnesium in the form of oxides and/or hydroxides can be, for example, intact and/or fragmented refractory bricks resulting from operations of demolition of insulating coatings, typical of the metallurgical and steelmaking sectors where they are widely used in crucibles/vats/ladles/baskets.

Other compounds containing calcium and/or magnesium in the form of oxides and/or hydroxides can be, for example, concrete flows deriving from the building sector.

Other compounds containing calcium and/or magnesium in the form of oxides and/or hydroxides can also be the slags from industrial transformation processes and/or the corresponding wastes and/or sub-products deriving from other industrial processes, such as for example black and/or white steelworks slags deriving from the treatment of steel in primary (EAF, Electric Arc Furnace) and/or secondary (LF, Ladle Furnace) electrosteel, and/or from the treatment of steel in cupola furnaces, or even spent foundry soils or sands. This slag can contain, for example, MgO, CaO, FeO, SiO₂, Al₂O₃. Further compounds containing calcium and/or magnesium in the form of oxides and/or hydroxides can be artificial flows such as, by way of a non-limiting example, those deriving from the recovery of heavy ash originating from waste-to-energy processes of urban solid waste. These products can contain, in addition to calcium and/or magnesium in the form of oxides and/or hydroxides, other types of oxides and/or hydroxides, such as, for example (detected in chemical composition) SiO₂, Al₂O₃, Fe₂O₃, SO₃, Cl⁻, alkali. Such compounds can combine to form various mineralogical compositions, such as for example anorthite (Ca(Al₂Si₂O₈), gelenite (Ca₂Al₂SiO₇), in addition to quartz (SiO₂), lime and limestone (CaO, CaCO₃), ferrous and ferric oxides (FeO and Fe₂O₃), metallic aluminum (Al). Examples of such compounds containing calcium and/or magnesium in the form of oxides and/or hydroxides and other compounds are the products marketed by Officina per l'Ambiente Matrix^{®}, Sand Matrix^{®}, AGMatrix^{®}.

The Applicant has identified the products containing calcium and/or magnesium in the form of oxides and/or hydroxides as resources that are compatible with the polymeric product. In these flows, it may be that there are traces of carbon contained in quantities that do not make it comparable to the category of fuels identified above. By way of example, in the compounds containing calcium and/or magnesium oxide, the content of calcium and/or magnesium oxide can be at least 10% by weight, more preferably 25% by weight, even more preferably 50% by weight, even more preferably 75% by weight, even more preferably 90% by weight. Indeed, the composite polymeric product with calcium and/or magnesium material under the working conditions of the electric arc furnace, for example, can lead to the formation of calcium oxide and/or magnesium oxide directly in the melting slag. calcium and/or magnesium oxides, in solution in the melting slag, are very advantageous because they impact on the balances of acidity and basicity thereof, for example then affecting the life of the refractory material of the internal lining of the electric arc furnace, typically basic. Secondly, calcium and/or magnesium oxide quotas are very advantageous for regulating slag viscosity, a physical property that determines the ability to swell in order to cover the electric arc and reduce energy dissipation. The slag is swollen by the carbon contained in the composite polymeric product, thus deriving a technical synergy that is relevant from an industrial point of view. Currently, in the steelmaking sector, in electric arc furnaces for example, there are distinct injection points for the traditional fossil source used to swell the slag and for the source of calcium and magnesium oxide used to balance the basicity of the slag itself. In this case, however, between the different injection points there are different reaction chemistries and nonhomogeneous equilibria. The composite polymeric product containing calcium and/or magnesium in the form of oxides and/or hydroxides is advantageously a substitute for the traditional fossil source and, in addition compared to the state of the art, would have a local balancing of the viscosity of the slag that allows it to be maximized in use and utilization.

In accordance with other embodiments, the aforementioned process slags and/or waste-to-energy ashes are normally destined for landfill. When combined with the polymeric component, as a compound containing calcium and/or magnesium in the form of oxides and/or hydroxides, in metallurgical and steelmaking processes such as the blast furnace BF and the cupola furnace CF, such slags are advantageous, by virtue of the presence therein not only of calcium and magnesium oxides but also other oxides, as indicated above, among which for example and in particular silicon oxide, for the increase in yield of the metals present in the slags and/or in the ashes in the form of oxides which, thanks to the generation of reducing agents deriving from the polymeric component, are reduced in the metallic phase and can be advantageously recovered.

According to some embodiments, which can be combined with all the embodiments described here, the polymeric fraction of the composite polymeric product described here can be present in a percentage greater than or equal to 50%, preferably greater than or equal to 60%, more preferably greater than or equal to 70%, even more preferably greater than or equal to 80% by weight of the dry sample.

According to some embodiments, which can be combined with all the embodiments described here, the polymeric fraction of the composite polymeric product described here can be derived from waste, from refuse or recycling, in particular from domestic, urban and/or industrial waste.

According to some embodiments, which can be combined with all the embodiments described here, the polymeric fraction of the composite polymeric product as above comprises one, two or more of: polyethylene (PE), polypropylene (PP), polyethylene terephthalate (PET), polystyrene (PS), or combinations thereof. The PE can for example include high density polyethylene (HDPE) and/or low density polyethylene (LDPE).

According to some embodiments, which can be combined with all the embodiments described here, the aforementioned composite polymeric product has a calorific value not lower than 20 MJ/Kg, in particular not lower than 30 MJ/Kg, referred to the dry sample after 4 hours of drying at 105°C in accordance with the UNI EN 15400 standard or other equivalent recognized international standard. Here and in the present description, when the calorific value is mentioned, reference will always be made to the so-called lower calorific value (LCV), normally determined by subtracting, from the higher calorific value (HCV), the latent heat of vaporization of the water formed during combustion.

According to some embodiments, which can be combined with all the embodiments described here, the aforementioned densified and cooled composite polymeric product has a bulk density higher than 300 Kg/m³, in particular higher than 350 Kg/m³, more in particular higher than 400 Kg/m³, even more in particular higher than 500 Kg/m³, measured in accordance with the UNI EN ISO 61 standard or other equivalent recognized international standard.

According to embodiments, which can be combined with all the embodiments described here, the aforementioned composite polymeric product comprises a chlorine content not exceeding 3.5%, in particular not exceeding 2%, even more in particular not exceeding 0.8%, by weight of the dry sample after 4 hours of drying at 105°C, in accordance with the UNI EN 15408 standard or other equivalent recognized international standard.

According to some embodiments, which can be combined with all the embodiments described here, the aforementioned composite polymeric product comprises a Sulfur content not exceeding 5000 mg/Kg, which corresponds to 0.5% by weight, in particular not exceeding 1000 mg/kg, which corresponds to 0.1% by weight, according to the DIN 51724-3 (2012-07) method, or other equivalent recognized international standard.

Advantageously, in some embodiments, which can be combined with all the embodiments described here, the composite polymeric product can be densified, that is, is subjected to densification. By the term "densification" we mean any process of volumetric reduction attributable to agglomeration, conglomeration, extrusion, pelletization, homogenization, drawing, whereby products are obtained with a physical form attributable to briquettes, agglomerate, flake, pellet, conglomerate, densified. Such densification allows to obtain a densified polymeric material that has been homogenized. Such densification allows to eliminate gaseous inclusions, consequently reducing the unwanted emission of gaseous substances in the processes in which the composite polymeric product described here is used, for example in the steelmaking sector.

Some embodiments also concern a method for producing a composite polymeric product, which for example can be used, preferably but not limited to, in the steelmaking sector, in at least partial replacement of fossil sources, or for example in a thermal or catalytic conversion process, for example gasification or pyrolysis.

According to some embodiments, the method provides to make available an appropriate polymeric fraction in fragmented form with a desired size, which is processed by associating with it one or more additional compounds, in particular fuel compounds as defined here and/or carbonate compounds and/or products containing calcium and/or magnesium in the form of oxides and/or hydroxides, or mixtures thereof, for example as described above, in order to obtain the composite polymeric product described here.

The operation of processing the polymeric fraction in fragmented form with the aforementioned one or more additional compounds can be carried out cold or hot. In the first case, the final composite polymeric product will generally be heterogeneous, that is, with the physical forms of polymeric fraction and additional compounds separated from each other, while in the second case it will be homogeneous, that is, with the physical forms of polymeric fraction and additional compounds associated with each other, combined and bonded together.

In particular, the fuel and/or carbonate compounds and/or products containing calcium and/or magnesium in the form of oxides and/or hydroxides described here can be associated with the polymeric fraction by processing them by mixing. For example, mixing can be cold or hot.

According to some embodiments, the polymeric fraction, before or while being processed together with the fuel and/or carbonate compounds and/or products containing calcium and/or magnesium in the form of oxides and/or hydroxides, can be subjected to densification or agglomeration. In possible implementations, the densification or agglomeration can be the process, or be part of the process, by means of which the polymeric fraction and the one or more additional compounds described here are combined or associated in the final composite polymeric product. Typically, the densification or agglomeration is carried out hot.

According to some embodiments, the polymeric fraction can be subjected to a granulation or shredding process which, for example, can provide that the material is shredded in a shredder.

In some embodiments, the granulation or shredding process can be carried out before or after the polymeric fraction has been processed together with the fuel and/or carbonate compounds and/or products containing calcium and/or magnesium in the form of oxides and/or hydroxides, or it can be carried out while the polymeric fraction is processed together with the fuel and/or carbonate compounds and/or products containing calcium and/or magnesium in the form of oxides and/or hydroxides; in the latter case, the granulation can be the process, or be part of the process, by means of which the one or more additional compounds described here are associated with the polymeric fraction.

According to some embodiments, the granulation or shredding can take place after the polymeric fraction has been subjected to densification.

According to some embodiments, the polymeric fraction can be previously subjected to primary selection, for the removal of metallic material, non-polyolefin polymers and non-polymeric extraneous fraction, or to a process of removal of pollutants, such as extraneous fractions containing aggregate/heavy metals and polymers containing chlorine such as PVC, for example through optical readers or flotation on air/water. The Applicant has found that, by using a selected flow of polymers to obtain the composite polymeric product described here, it is possible to advantageously obtain a low percentage of chlorine, sulfur, residue (ash), a high lower calorific value and a constant chemical composition.

According to possible embodiments, the composite polymeric product described here has a content of aluminum, more in particular of metallic aluminum, lower than 3% by weight, in particular lower than 2% by weight. In other embodiments, the composite polymeric product described here can be essentially free of aluminum, more in particular metallic aluminum.

Some embodiments of the method described here provide to produce a composite polymeric product starting from a primary heterogeneous mixture comprising polymeric material.

In possible embodiments, the method can comprise:
- fragmentation into the desired size of a primary heterogeneous mixture comprising polymeric material, obtaining a fragmented material of the desired size;
- primary mechanical selection, without water, of the fragmented material for the removal of metallic material, non-polyolefin polymers and non-polymeric extraneous fraction;

- subjecting the fragmented material to plasticization, obtaining a densified material;
- subjecting the densified material to a cooling operation, in particular quenching at least by means of air cooling carried out with pneumatic transport, obtaining a densified and cooled material;
- associating one or more additional compounds with the polymeric fraction before and/or simultaneously with and/or subsequently to densification, in order to obtain the composite polymeric product.

According to other embodiments, the method, after cooling by quenching, can provide to fragment the composite polymeric product into the desired size.

The composite polymeric product can then be fragmented into the desired size, to obtain a composite polymeric product in the desired fragmented form, for example in the form of granules, grains, powder or similar fragmented forms, here and in the present description referred to as granules, by way of example.

In other embodiments, however, the method does not provide the additional fragmentation after the cooling by quenching, and the composite polymeric product is supplied and made available for the necessary applications in the form and dimensions obtained downstream of plasticization and cooling.

In some embodiments, the composite polymeric product of the present invention can be advantageously used as a fuel, for example in processes for making metal products which, in particular, provide processing at high temperatures, for example reached by means of burners, lances, furnaces.

In some embodiments, the composite polymeric product of the present invention can be advantageously used as a carbon source, for example to generate reducing agents, such as carbon monoxide or syngas, in processes for producing metal products.

In some embodiments, the composite polymeric product described here can have different forms and/or dimensions, according to requirements; for example, the composite polymeric product can be formed as spheres, pellets or granules of variable diameter, or even in cylindrical, discoidal or elongated shapes, flakes, densified, agglomerate, chips, or be in powder, or even other desired forms.

In some embodiments, the composite polymeric product described here can be obtained ground, comminuted or finely pulverized, for example in order to be picked up and moved by high pressure or high velocity air and/or gas flows.

For example, in some embodiments the composite polymeric product can be produced as granules of varying diameter between 0.1mm and 10mm, and in other embodiments this range can even be wider, for example between 0.1mm and 300mm.

In general, according to possible embodiments, the granules of densified composite polymeric product can have a size comprised between 0.01mm and 300mm.

In possible implementations, the granules of densified composite polymeric material can have a size comprised between 0.01mm and 3mm. For example, granules with this size can be used for insufflation.

In other possible implementations, the granules of densified composite polymeric product can have a size comprised between 3mm and 10mm. For example, granules with this size can also be used for insufflation.

In other possible implementations, the granules of composite polymeric product can have a size comprised between 10mm and 300mm. For example, granules with this other size can be used for loading, for example in a basket or hopper together with metal scrap to be introduced into an electric arc furnace.

In some embodiments, the composite polymeric product can include a polymeric fraction, which for example can be present in a percentage greater than 50%, preferably greater than 60%, more preferably greater than 70%, even more preferably greater than 80%, by weight of the dry sample.

In some embodiments, the embodiments of the method described here can provide, before plasticization, an addition, to the fragmented material, of a quantity lower than 50%, preferably lower than 35%, even more preferably lower than 20% by dry weight of the fragmented material of a product consisting mainly of iron oxides deriving from the process of rolling metal products. Such a product has a fine size, ranging from 0 to 50mm, and preferably consists of at least 80% by dry weight of Fe oxides, preferably at least 85% by dry weight, even more preferably at least 90% by dry weight. This addition is intended to make the steelmaking process efficient, for example.

In some embodiments, the polymeric fraction can comprise one, two or more of the following polymers: polyethylene (PE), polypropylene (PP), polyethylene terephthalate (PET), polystyrene (PS) or mixtures thereof. The PE can for example include high density polyethylene (HDPE) and/or low density polyethylene (LDPE).

In still further embodiments, the composite polymeric product can comprise elastomers, such as natural rubber (NR) or styrene-butadiene rubber (SBR) for example.

In possible embodiments, the composite polymeric product according to the present invention can comprise a chlorine content not exceeding 3.5%, preferably not exceeding 2%, more preferably not exceeding 1%, even more preferably not exceeding 0.8%, referred to the dry sample after 4 hours of drying at 105°C, in accordance with the UNI EN 15408 standard or another equivalent recognized international standard.

In yet other embodiments, the composite polymeric product can have a calorific value not lower than 20 MJ/Kg, in particular not lower than 30 MJ/Kg, referred to the dry sample after 4 hours of drying at 105°C, in accordance with the UNI EN 15400 standard or another equivalent recognized international standard.

In some embodiments, the method for producing a composite polymeric product described here provides to initially supply a primary heterogeneous mixture of materials to be processed, comprising polymeric material.

This primary heterogeneous mixture can be heterogeneous in form, composition, density, consistency and origin of the materials composing it.

In some embodiments, the primary heterogeneous mixture can comprise plastic materials, either mixed plastics waste, or recovered mixed plastics, or virgin materials, that is, not waste, recycled or discarded.

In some embodiments, the plastic materials can comprise urban and/or special waste, of a heterogeneous type and possibly with a high plastic content, for example packaging, single-use plastic objects, plastic waste in general.

In some embodiments, the plastic materials can come from waste sorting, disposal and/or recycling plants in which they have been previously collected and subjected to one or more recovery operations.

For example, a typical separation that takes place in such plants advantageously separates recyclable polymers, for example because they lend themselves to being re-melted and processed in order to produce semi-finished products and/or finished products, and not traditionally recyclable plastic polymers, for example because they cannot be traced back to a single family of polymers.

The aforementioned fraction of plastic polymers consisting of several families of polycoupled polymers is, preferably, the starting material treated in the present invention.

The applicability of the production method according to the embodiments described here is not limited by the fact that the primary heterogeneous mixture comprises mixed plastics waste, since virgin and/or homogeneous plastic materials can also be processed.

Moreover, the applicability of the method according to the embodiments described here is not limited by the fact that the primary heterogeneous mixture only comprises plastic materials, since other types of materials can also be present.

In the primary heterogeneous mixture it is therefore possible to identify a plastic fraction, substantially comprising plastic materials, and a non-plastic fraction.

The polymeric, or plastic, fraction can comprise polymers, thermoplastic polymers, thermosetting polymers, elastomers, polyolefins, or mixtures thereof, or other types of combinations thereof.

The polymeric, or plastic, fraction can comprise one, two or more of the following polymers: polyethylene (PE), polypropylene (PP), polyethylene terephthalate (PET), polystyrene (PS), or mixtures thereof, or other types of combinations thereof. The PE can for example include high density polyethylene (HDPE) and/or low density polyethylene (LDPE).

The polymeric, or plastic, fraction can also comprise styrene butadiene rubber (SBR), natural rubber (NR), or mixtures thereof or other types of combinations thereof.

The non-polymeric fraction of the primary heterogeneous mixture can comprise substances suitable to give additional characteristics to the composite polymeric product, so as to improve or expand its applicability of use or optimize the production process itself.

In some embodiments of the method for producing the composite polymeric product described here, it is provided that the primary heterogeneous mixture is fragmented, for example shredded by a shredder, a bag opener machine, or milled, or by using another fragmentation device, thus obtaining a fragmented material, of desired size, also called, in jargon, leaf.

This fragmentation operation can be set up in such a way as to supply fragmented material with as homogeneous a size as possible, in order to optimize subsequent processing, such as densification for example.

In some embodiments, the fragmented material can be subjected to primary mechanical selection, as described above. This primary mechanical selection, carried out for example with mechanical separation means, is able to at least partly remove any unwanted components present in the polymeric mixture.

In some embodiments, the primary selection can be carried out by means of an induced current metal body separator or magnetic separator.

According to possible embodiments, the composite polymeric product described here has a content of aluminum, more in particular of metallic aluminum, lower than 3% by weight, in particular lower than 2% by weight. In other embodiments, the composite polymeric product described here can be essentially free of aluminum, more in particular metallic aluminum.

In other embodiments, the primary selection can be carried out by means of a gravitational decanter which, advantageously, selects the flow of the plastics on the basis of the density at which the machine's parameters are set. By way of example, the gravitational decanter is able to exclude from the flow of material all plastic and non-plastic bodies having a density higher than a certain threshold, allowing to process only plastics suitable for the, for example, steelmaking process and excluding, for example, very dense plastics (PET, PVC), non-polymeric bodies (stones, wood, paper, fabric) and other extraneous fractions.

In still other embodiments, the primary selection can also be carried out by means of an optical reader located above a conveyor belt that analyzes the flow of shredded plastics during the movement operation and excludes unwanted fractions from the flow.

The embodiments of primary selection described here are advantageously used to exclude, from the flow of fragmented plastic material, materials that compromise the downstream densification and/or shredding process, and which are not suitable for the, for example, steelmaking process, such as polyvinyl chloride (PVC), fabrics and paper. These materials excluded from the process flow are not very suitable, or are unsuitable, to be processed, for example, for plasticization, because they have a melting temperature higher than the working temperature of the plasticizer, such as metallic material for example.

Moreover, these unwanted components can comprise non-polyolefinic and/or thermosetting polymers, which can decompose or carbonize at the working temperatures of the plasticizer, making the method less efficient.

These unwanted components can also comprise non-plastic components, incompatible with the plastic material.

In some embodiments, the primary selection can be performed using techniques that do not involve the use of water.

This characteristic allows the moisture or water content present in the final composite polymeric product to be kept low.

Advantageously, this allows to use the final composite polymeric product in applications for which a controlled water content is required, such as those in the steelmaking sector, for example.

Advantageously, these selection operations allow, starting from a heterogeneous flow of plastics deriving, for example, from urban collection of domestic waste, to obtain a composite polymeric product with constant chemical characteristics, such as %C, %H, obtained by means of UNI EN 15407:2011 standard or another equivalent recognized international standard.

Advantageously, these selection operations allow, starting from a heterogeneous flow of plastics deriving, for example, from urban collection of domestic waste, to obtain a composite polymeric product with an extremely low content of pollutants (such as Cl, S, Hg, Cd, Pb) and compatible with the application, for example, in the steelmaking sector or for thermal or catalytic conversion processes.

The following Table 1 shows the results of parameter analysis of pollutant compounds Cl, S, Hg, Cd, Pb in three samples (1, 2, 3) of composite polymeric product obtained, having an exemplary polymeric fraction content higher than about 95% by weight. The last column shows the type of test used, where necessary. In the case of the polymeric fraction content, please note that other possible test methodologies are ASTM E 1252, product analysis or other methodology that can be adopted according to requirements.

| Table 1 | | | | |
|---|---|---|---|---|
| Sample | 1 | 2 | 3 | Methodology |
| Polymeric fraction content (heterogeneous plastics, %w/w) | 95.2 | 97.1 | 98.4 | UNI EN ISO11357 - 3 |
| Cl (%dry matter) | 0.36 | 0.21 | 0.11 | UNI EN 15408:2011 |
| S (%dry matter) | 0.08 | 0.06 | 0.05 | UNI EN 15408:2011 |
| Pb (mg/Kg) | 10 | 4.5 | 2.5 | UNI EN 15411:2011 |
| Hg (mg/Kg) | 0.43 | 0.25 | 0.11 | UNI EN 15411:2011 |
| Cd (mg/Kg) | 2.5 | 0.9 | 0.5 | UNIEN 15411:2011 |

Advantageously, these selection operations allow, starting from a heterogeneous flow of plastics deriving, for example, from urban collection of domestic waste, to eliminate unwanted non-polymeric fractions that would otherwise compromise properties such as lower calorific value, density and pneumatic transportability.

In some embodiments, the fragmented material, possibly deprived of some components through the operations of primary separation, can be stored for later use.

Some embodiments of the method for producing the composite polymeric product described here further comprise a plasticizing, or densifying, operation, wherein the fragmented material is processed to obtain a densified material.

By the term "plasticization" or derivatives, such as "plasticizer" or "plasticized", we mean a process through which the polymeric fraction of the primary heterogeneous mixture, or even only part of it, is brought to the melting point so that it is thickened and homogenized, for example due to the thermal effect of heating and the effect of friction caused by rubbing. Here and hereafter in the disclosure, we may similarly also use the term "densification", or derivatives, such as "densifier" or "densified", or the term "agglomeration", or derivatives, such as "agglomerate" and "agglomerator", in place of "plasticization" or its derivatives, such as "plasticizer" or "plasticized".

In some embodiments, this plasticizing operation can be performed using an extruder, possibly a twin-screw extruder.

In some embodiments, this operation can be performed for example by feeding the fragmented material by means of a hopper into the plasticizer, for example into the extruder, which can work in a variable temperature range, suitable to melt the materials that make up the fragmented material.

In some embodiments, the Applicant has determined that the plasticization or densification temperature to obtain a composite polymeric product with optimal physical characteristics is between 180°C and 300°C, preferably between 200°C and 280°C. The densification, carried out downstream of the aforementioned selection, allows to obtain a homogeneous composite polymeric product with excellent properties of pneumatic transportability, high hardness and tensile strength, high internal cohesion between the various types of polyolefins.

In other possible embodiments, the composite polymer described here can have a density which, expressed as bulk density, thanks to the densification can be higher than 300 Kg/m³, in particular higher than 350 Kg/m³, more in particular higher than 400 Kg/m³, even more in particular higher than 500 Kg/m³ measured in accordance with the UNI EN ISO 61 standard or another equivalent recognized international standard.

The densified material can be directly cut or sectioned to size at the outlet of the plasticizer, for example by means of a shear, in order to obtain densified material of varying forms and dimensions, as a function of an outlet section of the plasticizer and of the cutting rate.

In some embodiments of the method for producing the composite polymeric product of the present invention, it is possible to provide, as mentioned, a step of cooling the densified material by quenching, in the forms and dimensions made available downstream of the plasticizer, for example in the form of ingots or other suitable forms. Quenching is advantageously carried out at least by air cooling carried out with pneumatic transport.

In one embodiment, the quenching provides that the hot densified material is subjected to a granulation process able to maximize heat exchange and air-cool the composite polymeric product, even during pneumatic transport. The granulator or shredder in question is to be understood as consisting of a feed section, a casing containing a blade rotor, an evacuation section and the material evacuation pipe. Optionally, the evacuation section and the evacuation pipe can be decoupled by means of a mean for the mechanical extraction of the material from the granulator's rotor, for example an auger or conveyor belt, sealed to maintain the vacuum between pipe and casing. Advantageously, the cooling of the material is maximized by the flow rate of the air drawn from the material evacuation zone by the granulator's rotor. The air flow drawn from the material evacuation point allows the shredder to be put in a vacuum, to guarantee maximum air circulation between the rotor and the material during the volumetric reduction, and to guarantee a high heat exchange in the evacuation pipe of the flow of polymeric material moved by air. The granulator as a whole is hermetically insulated. Under such operating conditions, the material is fed to the mill at a temperature higher than 170°C, preferably higher than 180°C, and it is extracted at a temperature lower than 60°C, preferably lower than 50°C. Furthermore, heat exchange for cooling purposes can advantageously also be made possible by the water-cooling circuit of the blade rotor that shreds the densified polymeric material.

In another embodiment, the quenching is carried out by means of the aforementioned granulation process, by mixing the hot densified material with an auxiliary plastic additive whose moisture content is able to speed up the cooling of the composite polymeric product without compromising its properties.

In some embodiments of the method for producing the composite polymeric product of the present invention, it is possible to provide, simultaneously or after cooling, the fragmentation of the composite polymeric product in a suitable fragmentation device. For example, the fragmentation can be a grinding, which can typically be carried out by means of a mill. Favorably, in the event that the fragmentation is carried out simultaneously and for the purposes of quenching, this fragmentation can include the aforementioned granulation process.

In some embodiments of the method for producing the composite polymeric product of the present invention, it is provided to screen the fragmented polymeric product, for example in granules, so as to obtain a polymeric product of uniform size.

In some embodiments, the composite polymeric product can be stored in a storage chamber, or in a pit, where it is kept in contact with the surrounding air.

Pit storage is advantageous, for example compared to silo storage, since it further promotes heat exchange and cooling of the composite polymeric product in contact with the air.

In some embodiments of the method for producing the composite polymeric product of the present invention, it is possible to provide the mixture of the fragmented material, so-called leaf, with a polymeric particulate material, before carrying out the plasticization.

This mixing can take place after the initial fragmentation, after the primary selection or at the same time as the step of storing the fragmented material.

In some embodiments, the polymeric particulate material can have fine dimensions and size, or in any case smaller than those of the fragmented material.

Advantageously, this characteristic allows to improve the efficiency of the plasticization method, since the void volumes of the fragmented material are reduced. For example, if a twin-screw extruder is used for the plasticization, the void volumes comprised between one thread and the other of the extruder screws are advantageously reduced.

Advantageously, the filling of the hollow spaces between the heterogeneous polyolefin shredded leaves and the threads of the extruder screws with the polymeric particulate material allows for a remarkable optimization of the process, eliminating gaseous inclusions, homogenizing the flow of processed material and maximizing the density of the composite polymeric product obtained and increasing productivity.

In some embodiments, the polymeric particulate material can comprise discarded granules of composite polymeric product, for example downstream of process water separation operations.

In particular, the polymeric particulate material can comprise a part of material of nominal dimensions smaller than 20mm and another part of material of nominal dimensions smaller than 3mm.

In some embodiments, such polymeric particulate material can originate from other waste treatment processes, or from plastic material waste deriving from other production cycles.

In some embodiments, the polymeric particulate material can comprise scraps coming from plastic processing production cycles.

In other embodiments, the polymeric particulate material can come from water treatment operations.

Typically, in these operations, waters containing plastic material are filtered in order to remove the polymeric particulate material on the basis of dimensions, size, weight, density.

For example, these operations can be performed by making a flow of water pass through a filter comprising two discoidal membranes placed in reciprocal co-rotation. The water channeled between the two membranes flows toward the outside of the filter, leaving inside a polymeric particulate material with a diameter greater than the dimensions of the filter's mesh.

Many other ways of obtaining the polymeric particulate material are also possible.

Depending on the type of components comprised in the water to be purified or in the waste material to be screened, the polymeric particulate material can comprise comminuted fragments of polyolefins or other polymers.

The polymeric particulate material can consist of the fine fraction of the composite polymeric product itself obtained from the screening operation downstream of the shredding. By way of example, the polymeric particulate material can consist of the fraction smaller than 2mm removed during the screening process downstream of the shredding.

Advantageously, the presence of comminuted fragments of polyolefins or other polymers contributes to increasing the calorific value of the final composite polymeric product, improving its efficiency for possible uses as a fuel.

Advantageously, the density and compactness of the final composite polymeric product can be adjusted by the quantity of any comminuted fragments of other materials present in the polymeric particulate material.

These and other characteristics therefore allow the embodiments of the method for producing the composite polymeric product of the present invention to be flexible, and also to be used in an integrated manner with respect to other methods or cycles for producing plastic materials.

In addition, these characteristics allow to make the production process more efficient for the purposes of disposal, recycling and reuse of waste materials, since it is possible to treat materials of different types and origins.

As mentioned, it is also possible, before the plasticization step, to associate the fragmented material with one or more additional compounds in accordance with the present invention.

In some embodiments, these additional compounds can be or include fuel and/or carbonate compounds and/or products containing calcium and/or magnesium in the form of oxides and/or hydroxides, as described above.

In possible implementations, there can be provided an association with the fragmented material, before the plasticization step, of a quantity of additional compounds lower than 50%, preferably lower than 40%, more preferably lower than 30%, even more preferably lower than 20% by dry weight of the fragmented material subjected to the primary selection.

In other embodiments, these additional compounds can also include, for example, other materials suitable to give specific density, composition, mechanical properties and/or functionalities to the final composite polymeric product.

For example, it is possible to add a ferrous matrix compound, which can consist predominantly of iron oxides, which can adapt for example to steelmaking applications.

Favorably, the addition of iron oxides to the polymeric product can bring multiple advantages to the process. First of all, the polymeric product, containing carbon and hydrogen, under thermodynamic conditions such as those in which it reacts once injected, for example in the electric arc furnace, for the production of metal products, generates moles of metal oxide reducing agents, such as CO and Hz. These reducing agents can directly reduce the iron oxides present in the composite polymeric product, generating metallic iron that is added to the steel produced by means of traditional operation. A part of the total amount of unreacted iron oxides directly forms the melting slag. This coupling promotes the recovery of steel mill by-products containing iron oxides, such as rolling scale or black slag of the melting furnace, for example. Advantageously, moreover, the addition of iron oxides leads to an increase in the density of the polymeric product and consequently to an improvement in the pneumatic transportability of the product, for example, in the electric arc furnace for the production of metal products. Slag penetration capacity also improves, and therefore product yield in the melting process.

In possible implementations, it can be provided to add to the fragmented material, before the plasticization step, a quantity lower than 50%, preferably lower than 35%, even more preferably lower than 20% by dry weight of the fragmented material subjected to primary selection, of a product consisting mainly of iron oxides deriving from the rolling process of metal products, preferably consisting of at least 80% by dry weight of Fe oxides, preferably at least 85% by dry weight, even more preferably at least 90% by dry weight. For example, such a ferrous matrix compound can have a size ranging from 0 to 50mm.

Another example of possible additives added prior to plasticization are additives containing desiccants or in general moisture control or reduction agents.

These additives, for example with ferrous matrix and/or containing desiccants or moisture control or reduction agents, can also be added in combination with each other in the embodiments described here.

In the embodiments that provide quenching to perform the cooling, the densified material can be mixed with an auxiliary plastic additive, having a lower temperature, in order to cool it rapidly, stabilizing its chemical structure.

In some embodiments, the auxiliary plastic additive can have characteristics of composition and density similar to those of the densified material, but lower melting temperature.

In some embodiments, the auxiliary plastic additive can comprise the cold final product previously obtained by means of the embodiments of the method described here.

In alternative embodiments, the auxiliary plastic additive can originate from other operations associated with the treatment of materials from not entirely dissimilar production processes.

For example, the auxiliary plastic additive can come from processes that provide a selection of plastic materials by means of flotation operations on water, considered at ambient temperature and pressure.

In such operations, typically, various components of a suspension comprising plastic materials are separated on the basis of their physical characteristics, such as weight, density, porosity, hygroscopicity and/or water and/or gas absorption in general.

These operations are typically performed using flotation tanks, or flotation cells.

In some possible variants, these operations can also comprise the insufflation of gas into the liquid, so that the solid components that have greater affinity with the gas are brought to the surface (floating material), while the heavier components, or those which have greater affinity with the liquid, fall toward the bottom of the tank (sinking material).

When these operations are carried out at the same time as processes of production, recycling or separation of plastic materials, the sinking material can comprise plastic materials compatible with and similar to the composite polymeric product of the present invention.

In some embodiments, the sinking materials can be employed as an auxiliary plastic additive in the operations of quenching the densified material.

In some embodiments, the auxiliary plastic additive can have a controlled moisture content, able to speed up the cooling of the composite polymeric product without compromising its properties. During granulation, the granulated composite polymeric product will transfer an amount of heat at least equal to the latent heat necessary to lower the moisture content of the auxiliary plastic additive, bringing it to a content lower than 1%, preferably lower than 0.5%. The transfer of heat of the composite polymeric product leads to a lowering of the equilibrium temperature of the flow of plastic additive and of the composite polymeric product in a very short time.

If necessary, the water content can be adjusted by means of drying operations so as not to exceed any limits and regulations provided for in the procedures in which the final composite polymeric product is used.

In some embodiments, the auxiliary plastic additive is presented as a high density plastic material, comprising for example a styrene fraction and/or polyethylene terephthalate (PET), polystyrene (PS), and/or high density polyethylene (HDPE) or mixtures thereof, or other types of combinations thereof.

In some embodiments, the auxiliary plastic additive has a density greater than the density of water at ambient temperature and pressure.

Advantageously, the auxiliary plastic additive thus obtained, when mixed with the densified material, prevents its conglomeration, limiting or completely blocking any melting reactions that may occur on hot surfaces.

This characteristic allows to limit, or prevent altogether, the conglomeration of the densified material.

Advantageously, the controlled moisture content helps to reduce the temperature of the densified material, favoring heat exchange also thanks to possible evaporation processes.

Furthermore, when the moisture present in the auxiliary plastic additive comes into contact with the hot densified material, it can promote surface crystallization, increasing its pneumatic transportability and efficiency of use. This characteristic is advantageous in those cases in which the composite polymeric product needs to be introduced by means of burners or lances into apparatuses for producing metal products, such as electric arc furnaces for example.

It is clear that modifications and/or additions of parts or steps may be made to the composite polymeric product and to the method for producing it as described heretofore, without departing from the field and scope of the present invention, as defined by the claims.

It is also clear that, although the present invention has been described with reference to some specific examples, a person of skill in the art will certainly be able to achieve many other equivalent forms of composite polymeric product and corresponding production method, having the characteristics as set forth in the claims and hence all coming within the field of protection defined thereby.

## Claims

1. Composite polymeric product comprising a polymeric fraction and the following additional compounds:
i) calcium (Ca) and magnesium (Mg) based compounds,
and/or
ii) fuel compounds, defined as carbon source compounds, which include sources of fixed carbon, in crystalline or amorphous form, or sources of volatile carbon in hydrocarbon chain.

2. Composite polymeric product as in claim 1, wherein said additional compounds are present in the composite polymeric product in a percentage lower than 50%, preferably lower than 40%, more preferably lower than 30%, even more preferably lower than 20% by weight of the dry sample of composite polymeric product.

3. Composite polymeric product as in claim 1 or 2, wherein said compounds i) are chosen from materials comprising: calcium carbonate, magnesium carbonate, calcium oxide, magnesium oxide, taken individually or in combinations thereof.

4. Composite polymeric product as in claim 1, 2 or 3, wherein said calcium and magnesium based compounds i) are present in quantities lower than or equal to 50%, in particular lower than or equal to 40%, even more in particular lower than or equal to 30%, even more in particular lower than or equal to 20% of the dry sample of composite polymeric product.

5. Composite polymeric product as in one of claims from 1 to 4, wherein said polymeric fraction is present in a percentage greater than or equal to 50%, in particular greater than or equal to 60%, more in particular greater than or equal to 70%, even more in particular greater than or equal to 80% by weight of the dry sample of composite polymeric product.

6. Composite polymeric product as in any claim from 1 to 5, wherein said polymeric fraction comprises one, two or several of either: polyethylene (PE), polypropylene (PP), polyethylene terephthalate (PET), polystyrene (PS), or combinations thereof.

7. Composite polymeric product as in any claim from 1 to 6, wherein said composite polymeric product has a calorific value not lower than 20 MJ/Kg, in particular not lower than 30 MJ/Kg referred to the dry sample after 4 hours of drying at 105°C in accordance with the UNI EN 15400 standard or other equivalent recognized international standard.

8. Composite polymeric product as in any claim from 1 to 7, wherein said composite polymeric product has a bulk density higher than 300 Kg/m³, in particular higher than 350 Kg/m³, more in particular higher than 400 Kg/m³, even more in particular higher than 500 Kg/m³ measured in accordance with the UNI EN ISO 61 standard or other equivalent recognized international standard.

9. Composite polymeric product as in any claim from 1 to 8, wherein said composite polymeric product has a chlorine content not exceeding 2%, referred to the dry sample after 4 hours of drying at 105°C.

10. Composite polymeric product as in any claim from 1 to 9, wherein said composite polymeric product has a sulfur content not exceeding 1000 mg/Kg, which corresponds to 0.1% by weight, according to the DIN 51724-3 method (2012-07) or other equivalent recognized international standard.

11. Composite polymeric product as in any claim from 1 to 10, wherein said composite polymeric product and/or its polymeric fraction and/or the corresponding additional compound is/are in the form of spheres, pellets or granules of variable diameter, or also in cylindrical, discoidal or elongated forms, flakes, densified, agglomerated, chips, or be in powder, or also other desired forms.

12. Composite polymeric product as in any claim from 1 to 11, wherein said fuel compounds ii) are chosen from one or more compounds of a group that comprises: polymers and/or materials, as such or treated, of biogenic origin, in particular from activities of waste separation, composting and anaerobic and/or aerobic digestion of organic materials, and/or materials, as such or treated, of agri-food and/or vegetable and/or natural origin and/or fibers, and/or materials, as such or treated, of animal and/or industrial and/or marine origin, and/or industrial/civil/domestic/urban/biological sludge with an organic matrix from water purification, or possible combinations thereof,
coal and its derivatives, in particular graphite, anthracite, coke deriving from the coking process, biogenic derived materials such as biochar or tires, natural rubber (NR), SBR, SBS, Granular Vulcanized Rubber deriving from end-of-life tires, plastics deriving from the shredding of automotive scrap (Automotive Shredder Residue or Car Fluff), oily sludge, petroleum and its derivatives, fuel oils and its derivatives.

13. Composite polymeric product as in any claim from 1 to 12, wherein said fuel compounds ii) are present in quantities lower than or equal to 50%, in particular lower than or equal to 40%, even more in particular lower than or equal to 30%, even more in particular lower than or equal to 20% of the dry sample of composite polymeric product.

14. Composite polymeric product as in any claim from 1 to 13, wherein said composite polymeric product has an aluminum content, more in particular a metallic aluminum content, lower than 3% by weight.

15. Use of a composite polymeric product in accordance with any claim from 1 to 14 in a method for producing metal products from ferrous material, wherein said polymeric product is used in at least partial replacement of the fuel provided in the preheating and melting of the ferrous material and/or in at least partial replacement of carbon sources used for the refinement of molten metallic material, and/or as a reducing agent for the oxidized forms of the metals and/or as a foaming agent for the melting slag and/or as a carbon C and/or hydrogen H carrier.

16. Method for producing a composite polymeric product, wherein said method provides to make available a suitable polymeric fraction in fragmented form with the desired size, which is processed by adding to it the following additional compounds:
i) calcium (Ca) based compounds and magnesium (Mg) based compounds, in particular comprising one or more of either calcium carbonate and/or magnesium carbonate and/or calcium oxide and/or magnesium oxide, taken individually or in combinations thereof,
and/or
ii) fuel compounds, defined as carbon source compounds, which include sources of fixed carbon, in crystalline or amorphous form, or sources of volatile carbon in hydrocarbon chains.

17. Method as in claim 16, wherein said fuel compounds are chosen from one or more compounds of a group that comprises:
polymers and/or materials, as such or treated, of biogenic origin, in particular from activities of waste separation, composting and anaerobic and/or aerobic digestion of organic materials, and/or materials, as such or treated, of agri-food and/or vegetable and/or natural origin and/or fibers, and/or materials, as such or treated, of animal and/or industrial and/or marine origin, and/or industrial/civil/domestic/urban/biological sludge with an organic matrix from water purification, or possible combinations thereof,
coal and its derivatives, in particular graphite, anthracite, coke deriving from the coking process, biogenic derived materials such as biochar or tires, natural rubber (NR), SBR, SBS, Granular Vulcanized Rubber deriving from end-of-life tires, plastics deriving from the shredding of automotive scrap (Automotive Shredder Residue or Car Fluff), oily sludge, petroleum and its derivatives, fuel oils and its derivatives.

18. Method as in claim 16 or 17, wherein said composite polymeric product has an aluminum content, more in particular a metallic aluminum content, lower than 3% by weight.
